Europäisches Patentamt

European Patent Office

Office européen des brevets

(19)

(11) Numéro de publication : **0 448 893 A1**

# (12) DEMANDE DE BREVET EUROPEEN

(21) Numéro de dépôt : **90403426.1**

(51) Int. Cl.⁵ : **G05D 23/12, F25B 41/06**

(22) Date de dépôt : **03.12.90**

(30) Priorité : **04.12.89 FR 8915952**

(43) Date de publication de la demande :
**02.10.91 Bulletin 91/40**

(84) Etats contractants désignés :
**AT BE CH DE DK ES FR GB GR IT LI LU NL SE**

(71) Demandeur : **Blaizat, Claude**
**20, rue des Bluets**
**F- 75011 Paris (FR)**
Demandeur : **ITME ENTREPRISE**
**24 rue Auguste Chabrires**
**F-75015 Paris (FR)**

(72) Inventeur : **Blaizat, Claude**
**20 rue des Bluets**
**F-75011 Paris (FR)**
Inventeur : **Joseph, Joël**
**6 Boulevard Berchère**
**F-91150 Etampes (FR)**

(54) **Dispositif de moteur de régulation thermique.**

(57)    La présente invention concerne un dispositif de moteur de régulation thermique d'une enceinte quelconque et son procédé de fonctionnement. Ce dispositif est remarquable en ce qu'il est constitué d'un boîtier (2) et d'une vanne (3), accessoirement d'un bulbe (4) qui permet de réguler la température d'une enceinte extérieure sans énergie, par utilisation d'un système zéolithe-eau.

    Ce dispositif de régulation thermique trouve de nombreuses applications, notamment pour le transport de produits frais ainsi que pour la régulation d'opérations industrielles en génie chimique.

EP 0 448 893 A1

F I G.

## DISPOSITIF DE MOTEUR DE REGULATION THERMIQUE

La présente invention a trait à un dispositif de moteur de régulation thermique pouvant fonctionner à des basses pressions, de l'ordre du bar, et particulièrement efficace pour être adpaté aux systèmes de réfrigération zéolithe-eau conçus par la demanderesse et décrits dans la demande de brevet français n° 80 18796; l'invention concerne également le procédé de fonctionnement du dispositif. Ce dispositif permet de régler d'une façon permanente la température dans une enceinte pouvant contenir soit des liquides, soit des solides, cette enceinte étant du type isotherme. La source d'énergie thermique est, dans ce cadre, indépendante de la présente invention.

Pour de nombreux transports on utilise des engins frigorifiques nécessitant soit une énergie embarquée, du type accumulateurs électriques, soit des engins présentant un groupe électrogène puissant. La régulation thermique dans ce type d'engin est assurée par un thermostat dont le signal de la sonde commande une vanne électromagnétique qui assure la fermeture du circuit frigorifique ou chauffant de l'engin.

Dans d'autres systèmes, le signal de la sonde commande la mise en marche d'un moteur qui ouvre ou ferme des volets mobiles, bloquant aussi la circulation de gaz ou de liquide de refroidissement. Ces systèmes, par exemple dans le cas de conteneurs frigorifiques employés dans le transport aérien, sont munis de piles électriques. Etant donné que ces piles travaillent dans un milieu agressif et humide, les contacts sont souvent défectueux.

On sait qu'il est réalisé des systèmes frigorifiques qui ne nécessitent aucune énergie pendant leur utilisation, tel que celui décrit dans le brevet FR 80/18797, ainsi que des systèmes à adsorption d'ammoniac sur du chlorure de calcium ou eau/chlorure de lithium, ainsi que des systèmes contenant, par exemple, de la glace hydrique, de la glace carbonique, de l'azote liquide ou des plaques eutectiques, et où la régulation de la température de l'enceinte frigorifique se fait par ouverture ou fermeture du volet séparant l'enceinte où se trouve le produit à conserver de l'enceinte où se trouve le produit fournissant l'énergie thermique.

Cependant, l'utilisation de produits chimiques tels que ceux cités plus haut présente l'inconvénient majeur qu'ils sont corrosifs et abîment les différents systèmes et, de ce fait, leur mécanisme; de plus, ces dispositifs ne peuvent pas fonctionner correctement à basse pression.

La présente invention a pour objet de pallier à ces inconvénients en créant un nouveau dispositif de moteur de régulation thermique fonctionnant sans énergie. Seule la régulation exige une énergie, mais elle n'est pas l'objet de l'invention.

Le dispositif de moteur de régulation thermique selon l'invention est caractérisé en ce qu'il est constitué d'un boîtier muni d'un premier système opercules-membrane et constitué de deux chambres, à savoir une chambre principale dans laquelle est disposée une chambre secondaire, ladite chambre secondaire étant constituée par le volume qui est délimité par deux opercules et par une membrane, ladite membrane étant une paroi souple, et ladite chambre secondaire contient un gaz de sorte que, d'un côté de cette paroi, c'est-à-dire dans la chambre secondaire, on maintient la pression atmosphérique et, de l'autre côté, c'est-à-dire dans la chambre principale, on maintient une pression de gaz qui, à la température de fonctionnement, a une pression totale de vapeur égale à la pression atmosphérique.

De façon préférentielle, et pour assurer une prise de température de l'enceinte, le dispositif de moteur de régulation thermique est constitué d'un bulbe disposé à l'intérieur de l'enceinte, relevant la température intérieure de l'enceinte de façon à agir sur le dispositif moteur.

Préférentiellement, la pression du gaz, ayant une pression totale de vapeur égale à la pression atmosphérique, est déterminée par la température du point le plus froid de l'enceinte, cette température étant relevée par le bulbe.

Selon un mode particulier de réalisation de l'invention, la vanne est constituée de deux opercules et d'une membrane souple.

Selon un autre mode particulier de réalisation de l'invention, la tige est fixée de façon étanche d'une part sur l'opercule du boîtier et, d'autre part, sur l'opercule de la vanne.

Selon un autre mode particulier de réalisation de l'invention, deux des opercules des deux systèmes opercules-membrane sont fixés au boîtier de façon étanche.

Selon encore un autre mode de réalisation de l'invention, un ressort est disposé autour de la partie supérieure de la tige, de façon à faire face aux variations d'altitude et à une petite variation du point de consigne.

Selon un autre mode particulier de réalisation de l'invention, un excentrique solidaire du boîtier est fixé au sommet de la tige, ledit excentrique n'assurant, par une demi-rotation, que la position fermée de la vanne.

De façon préférentielle, le gaz contenu à l'intérieur de la chambre principale du boîtier assure l'ouverture ou la fermeture de la vanne suivant la température de l'enceinte et, par conséquent, suivant sa pression par rapport à la pression atmosphérique de la chambre secondaire.

Suivant la température à maintenir dans l'enceinte, le gaz utilisé est:

– pour une température de -25°C, du fréon 12,

– pour une température de -24°C, du chlorure de méthyle,

– pour une température de 0°C, du butane pur,

– pour une température de +12°C, du chlorure d'éthyle,

– pour une température de +16°C, du bromure d'éthylène,

– pour une température de +78°C, de l'alcool éthylique,

– pour une température de +100°C, de l'eau, chacun de ces produits, utilisé en tant que gaz, étant sous forme vapeur.

De façon facultative, un appareil de mesure avec enregistrement mécanique ou électrique mesure en permanence la pression dans l'enceinte à régler, la pression de gaz servant alors de mesure de la température de l'enceinte.

La présente invention concerne aussi le procédé de fonctionnement du dispositif de moteur de régulation thermique.

Le procédé de fonctionnement du dispositif de moteur de régulation décrit ci-dessus, comportant un boîtier, constitué d'un premier système opercules-membrane, associé à une vanne, elle-même constituée d'un système opercules-membrane, est caractérisé en ce que la vanne ouvre ou ferme le passage de fluide frigorigène suivant la température de l'enceinte en équilibrant la pression régnant à l'intérieur de la chambre avec la pression atmosphérique.

Si la température est supérieure à 0°C, la vanne ouvre le passage de circulation du fluide frigorigène qui circule. A l'inverse, si la température est inférieure à 0°C, la vanne ferme le passage de circulation du fluide frigorigène qui ne circule plus. Ceci ne fonctionne qu'avec du gaz de butane.

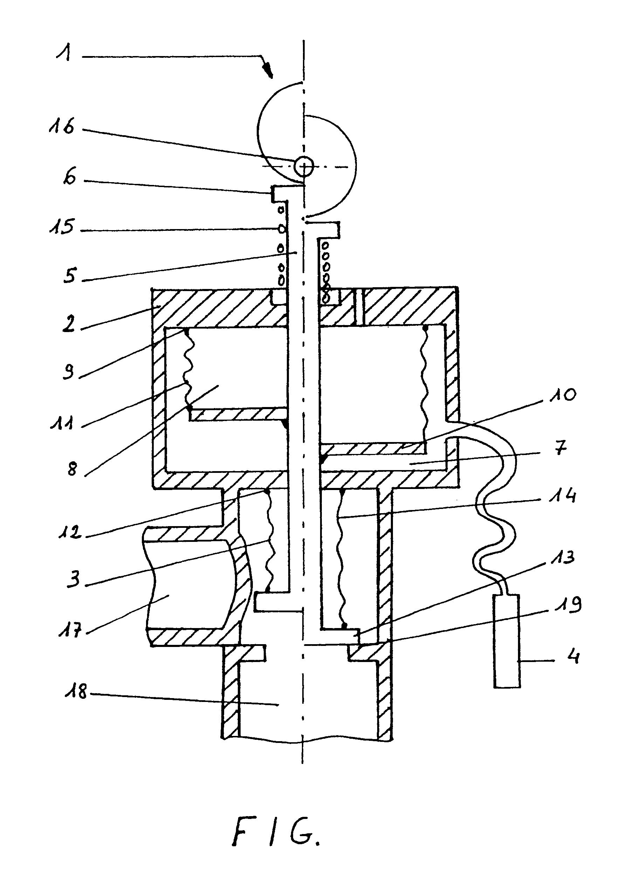

La présente invention est décrite ci-après de façon plus détaillée, en s'appuyant sur la figure jointe en annexe.

La figure unique représente le dispositif de moteur de régulation thermique d'une enceinte frigorifique.

Selon la figure, le dispositif de moteur de régulation thermique 1 règle la température d'une enceinte frigorifique. Ce dispositif est constitué d'un boîtier 2 muni d'un système opercules-membrane, d'une vanne 3, elle aussi constituée d'un système opercules-membrane, et d'un bulbe 4.

Les deux systèmes opercules-membrane sont reliés l'un à l'autre par une même tige 5 d'un système de commande 6 faisant saillie hors du boîtier 2. La tige 5 correspond à l'arbre de transmission permettant le mouvement linéaire du moteur.

Le bulbe 4 est disposé dans l'enceinte frigorifique dans laquelle il relève la température. Il est relié au dispositif moteur.

Le boîtier 2 est constitué d'une chambre principale 7 et d'une chambre secondaire 8. La chambre secondaire 8 est formée de deux opercules 9 et 10 et d'une membrane 11 ou paroi souple. Elle contient un gaz qui se trouve à la pression atmosphérique. A l'inverse, la chambre principale 7 contient un gaz tel que, par exemple, du butane. Un des objets de l'invention est de maintenir d'un côté, c'est-à-dire dans la chambre secondaire 8, la pression atmosphérique, et de l'autre côté, c'est-à-dire dans la chambre principale 7, une pression de gaz ayant, à la température de fonctionnement de l'enceinte frigorifique, laquelle température doit être réglée, une pression totale de vapeur égale à la pression atmosphérique.

La vanne 3 est formée de deux opercules 12 et 13 et d'une membrane 14, ou paroi souple.

La tige 5 présente au niveau de sa partie supérieure un ressort 15 permettant de faire face aux variations d'altitude et de maintenir l'état physique de la paroi souple 11 qui subit régulièrement des différentiels de pression entre la chambre principale 7 et la chambre secondaire 8.

Un excentrique 16 est fixé au sommet de la tige 5; il peut assurer un blocage de la vanne 3 uniquement en position fermée (se référer à la partie droite de la figure).

La vanne 3 est disposée à l'interconnexion de deux conduites 17 et 18, la conduite 17 étant dirigée vers l'eau et la conduite 18 vers la zéolithe, lesdites conduites 17, 18 assurant le passage du fluide frigorigène.

La conduite 18 présente un palier 19 sur lequel vient buter l'opercule 13 de la vanne 3 en fonctionnement.

La tige 5 est fixée de façon étanche sur l'opercule 10 et sur l'opercule 13. Les deux autres opercules 9 et 12 sont fixés de façon étanche sur le boîtier 2.

Après avoir décrit ci-dessus le dispositif, on peut expliquer maintenant son procédé de fonctionnement.

L'intérêt principal de l'invention est de maintenir un équilibre entre la pression atmosphérique de la chambre secondaire 8 et la pression totale de vapeur d'un gaz contenu dans la chambre principale 7, égale à la pression atmosphérique, de façon à maintenir en permanence la température prédéterminée de l'enceinte frigorifique. La pression totale de vapeur du gaz contenu dans la chambre principale 7 est déterminée par la température relevée par le bulbe 4 qui est disposé dans l'enceinte frigorifique.

Pour faciliter la compréhension du fonctionnement du procédé de l'invention, un exemple de réalisation est décrit ci-après.

Dans l'exemple on utilise le moteur comme vanne de régulation à grande ouverture de passage dans le cas d'une utilisation sur un ensemble zéolithe-eau, ensemble décrit dans le brevet FR 80/18797. La température de référence dans l'enceinte qu'on souhaite réguler est d'environ 0°C.

La figure unique représente une vanne permettant le transfert de 200 à 300 g d'eau à une pression comprise entre 4 et 8 millibars, ce qui représente des volumes gazeux de l'ordre de 50 m³/ heure.

L'intérieur de la chambre secondaire 8 est mis à la pression atmosphérique par l'intermédiaire de l'orifice 20. Le diamètre de l'opercule 10 est de l'ordre de 80 mm, celui de l'opercule 13 de 20 mm, lorsque du butane est disposé dans la chambre principale 7. Lorsque le bulbe 4 affiche une température de +4°C, la pression du butane dans la chambre principale 7 est de l'ordre de 1,25 bar. A l'inverse, la pression dans la chambre secondaire 8, laquelle chambre est à la pression atmosphérique, est donc de 1 bar. Une force de l'ordre de 10 newtons entraîne donc l'ouverture de la vanne 3.

La vanne 3 est alors ouverte et le fluide frigorigène peut circuler. L'enceinte commence à se refroidir.

Lorsque l'écart est de 1°C, la force est de l'ordre de 2,5 newtons.

A l'équilibre, c'est-à-dire lorsque le bulbe affiche 0°C, l'effet de ressort de la membrane 14 ferme la vanne 3 car la pression de la chambre principale 7 est égale à celle de la chambre secondaire 8. Le ressort 15 assure la fermeture de la vanne.

Ainsi, la réfrigération de l'enceinte frigorifique ne fonctionne plus.

Si la température affichée par le bulbe 4 dépasse de nouveau 0°C, la vanne 3 s'ouvre, et ainsi de suite.

La vanne 3 ne peut être bloquée qu'en position fermée par une demi rotation de l'excentrique 16.

Ce système de régulation thermique est surtout utilisé pour le transport de produits frais dont on souhaite conserver la fraîcheur pendant la période de transport (12 à 24 heures). Il peut aussi être utilisé pour le maintien d'une température de réfrigération dans des entrepôts frigorifiques de stockage.

Il existe d'autres applications dans le génie chimique, et plus particulièrement en pétrochimie et dans l'industrie chimique, pour commander et régler les soupapes de sécurité disposées au niveau des colonnes de distillation par exemple.

## Revendications

1. Dispositif de moteur de régulation thermique d'une enceinte travaillant à basse pression, caractérisé en ce qu'il est constitué
   - d'un boîtier (2) muni d'un premier système opercules-membrane et constitué de deux chambres:
     * une chambre principale (7) dans laquelle est disposée
     * une chambre secondaire (8),
   ladite chambre secondaire (8) étant constituée par le volume délimité par deux opercules (9, 10) et une membrane (11), ladite membrane étant une paroi souple, et contenant un gaz de telle sorte que, de part et d'autre de cette paroi, on maintient d'un côté, dans la chambre secondaire (8), la pression atmosphérique et, de l'autre côté, dans la chambre principale (7), une pression de gaz ayant, à la température de fonctionnement, une pression totale de vapeur égale à la pression atmosphérique,
   - d'une vanne (3) elle-même constituée d'un second système opercules-membrane, disposée à l'intérieur d'au moins deux conduites (17, 18) dans lesquelles circule le fluide frigorigène,
   les deux systèmes opercules-membrane étant reliés entre eux par une tige (5) solidaire d'un système de commande faisant saillie hors du boîtier (2).

2. Dispositif de moteur de régulation thermique selon la revendication 1, caractérisé en ce qu'il est constitué d'un bulbe (4) disposé à l'intérieur de l'enceinte et relevant la température intérieure de l'enceinte de façon à agir sur le dispositif moteur (1).

3. Dispositif selon la revendication 2, caractérisé en ce que la pression du gaz ayant une pression totale de vapeur égale à la pression atmosphérique est déterminée par la température du point le plus froid de l'enceinte, température relevée par le bulbe (4).

4. Dispositif selon l'une des revendications 1 à 3, caractérisé en ce que la vanne (3) est constituée de deux opercules (12, 13) et d'une membrane souple (14).

5. Dispositif selon l'une des revendications 1 à 4, caractérisé en ce que la tige (5) est fixée de façon étanche, d'une part, sur l'opercule (10) du boîtier (2) et, d'autre part, sur l'opercule (13) de la vanne (3).

6. Dispositif selon l'une des revendications 1 à 5, caractérisé en ce que les opercules (9, 12) sont fixés de façon étanche sur le boîtier (2).

7. Dispositif selon l'une des revendications 1 à 6, caractérisé en ce qu'un ressort (15) est disposé autour de la partie supérieure de la tige (5).

8. Dispositif selon l'une des revendications 1 à 7, caractérisé en ce qu'un excentrique (16) solidaire du boîtier (2) est fixé au sommet de la tige (5).

9. Dispositif selon la revendication 8, caractérisé en ce que l'excentrique (16) n'assure que la position fermée de la vanne (3).

10. Dispositif selon l'une des revendications 1 à 9, caractérisé en ce que le gaz contenu à l'intérieur de la chambre principale (7) du boîtier (2) assure l'ouverture ou la fermeture de la vanne (3) suivant la température de l'enceinte et, par conséquent, suivant sa pression par rapport à la pression atmosphérique de la chambre secondaire (8).

11. Dispositif selon l'une quelconque des revendications 1 à 10, caractérisé en ce que le gaz utilisé est:

– pour une température de -25°C, du fréon 12,

– pour une température de -24°C, du chlorure de méthyle,

– pour une température de 0°C, du butane pur,

– pour une température de +12°C, du chlorure d'éthyle,

– pour une température de +16°C, du bromure d'éthylène,

– pour une température de +78°C, de l'alcool éthylique,

– pour une température de +100°C, de l'eau, chacun de ces produits, utilisé en tant que gaz, étant sous forme vapeur.

12. Dispositif selon l'une des revendications 1 à 11, caractérisé en ce qu'un appareil de mesure avec enregistrement mécanique ou électrique mesure en permanence la pression dans l'enceinte à réguler, la pression de gaz servant alors de mesure de la température de l'enceinte.

13. Procédé de fonctionnement à basse pression du dispositif de moteur de régulation selon l'une quelconque des revendications précédentes, comportant un boîtier muni d'un premier système opercules-membrane, associé à une vanne elle-même constituée d'un système opercules-membrane, caractérisé en ce que la vanne (3) ouvre ou ferme le passage de fluide frigorigène suivant la température de l'enceinte en équilibrant la pression régnant à l'intérieur de la chambre principale (7) avec la pression atmosphérique.

14. Procédé selon la revendication 13, caractérisé en ce que la vanne (3) ouvre le passage de circulation de fluide frigorigène lorsque la température de l'enceinte est supérieure à 0°C, donc que la pression du gaz dans le cas du butane est supérieure à la pression atmosphérique.

15. Procédé selon la revendication 13, caractérisé en ce que la vanne (3) ferme le passage de circulation de fluide frigorigène lorsque la température de l'enceinte est inférieure à 0°C, donc que la pression du gaz dans le cas du butane est inférieure à la pression atmosphérique.

F I G.

EP 0 448 893 A1

## RAPPORT DE RECHERCHE EUROPEENNE

Office européen
des brevets

Numero de la demande

EP 90 40 3426

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | CH-A-234648 (H. JÖRGENSEN)<br>* page 2, ligne 91 - page 3, ligne 30; figure *<br>--- | 1-15 | G05D23/12<br>F25B41/06 |
| Y | FR-A-1289989 (THE BRITISH THERMOSTAT COMPANY LIMITED)<br>* page 1, colonne de gauche, ligne 39 - colonne de droite, ligne 11; figure *<br>--- | 1-15 | |
| Y | US-A-2214298 (W. GILBERT,SR)<br>* page 1, colonne de gauche, ligne 41 - page 2, colonne de gauche, ligne 10; figure 1 *<br>--- | 3, 12-15 | |
| Y | US-A-2602592 (H. TOMOSER)<br>* colonne 1, lignes 1 - 22 *<br>* colonne 1, ligne 44 - colonne 2, ligne 19 *<br>* colonne 4, lignes 16 - 34 *<br>--- | 8 | |
| Y | US-A-2116802 (P. SHIVERS)<br>* page 2, colonne de gauche, lignes 31 - 71 *<br>--- | 11 | |
| Y | US-A-1776401 (H. THOMPSON)<br>* page 2, lignes 84 - 114; figure 1 *<br>--- | 13-15 | **DOMAINES TECHNIQUES RECHERCHES (Int. Cl.5)** |
| A | FR-A-831073 (FABRIQUE D'APPAREILS ELECTRIQUES FR. SAUTER S.A.)<br>* page 2, lignes 21 - 75; figure *<br>----- | 1, 11 | G05D<br>F25B |

Le présent rapport a été établi pour toutes les revendications

| Lieu de la recherche | Date d'achèvement de la recherche | Examinateur |
|---|---|---|
| LA HAYE | 04 MARS 1991 | HELOT H.V. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8